# EUROPÄISCHE PATENTSCHRIFT

(11) **EP 1 342 680 B1**
(45) Veröffentlichungstag und Bekanntmachung des Hinweises auf die Patenterteilung: **28.03.2007**
(21) Anmeldenummer: 03003466.4
(22) Anmeldetag: 15.02.2003
(51) Int. Cl.: B29C 51/44, G05B 19/42

(54) **Verfahren zum Einstellen der Prozessdaten einer Stapeleinrichtung**
Method for setting the process data of a stacking device
Procédé de réglage des données de traitement d'un dispositif d'empilage

(30) Priorität: 05.03.2002 DE 10209650
(43) Veröffentlichungstag der Anmeldung: 10.09.2003
(73) Patentinhaber: ILLIG Maschinenbau GmbH & Co. KG, 74081 Heilbronn (DE)
(72) Erfinder: Karbach, Helmut, 74076 Heilbronn (DE)

(56) Entgegenhaltungen:
- EP-A- 1 085 389
- DE-C1- 19 803 300
- US-A- 4 757 459
- KROTH E: "PLASTICS ARTICLES DEFLASHING BY ROBOTS" EUROPEAN PRODUCTION ENGINEERING, CARL HANSER GMBH, MUNCHEN, DE, Bd. 16, Nr. 2, 1. Juni 1992 (1992-06-01), Seiten 63-66, XP000279135 ISSN: 0940-2470

## Beschreibung

Die Erfindung betrifft ein Verfahren zum Einstellen der Prozessdaten einer Stapeleinrichtung, die Teil oder Nachfolgestation einer Vorrichtung zum Verformen einer thermoplastischen Kunststofffolie zu tiefgezogenen Teilen - meist mit behälterförmiger Gestalt und deshalb nachfolgend als Behälter bezeichnet - ist. In dieser Vorrichtung wird die Folienbahn erwärmt, durch Differenzdruck mittels einer Form tiefgezogen und die Behälter werden in derselben oder einer nachgeschalteten Stanzstation aus der Folienbahn weitgehend ausgestanzt. Der Transport der Folienbahn erfolgt taktweise mittels einer Transporteinrichtung. Hinter der Stanzeinrichtung - in Durchlaufrichtung betrachtet - ist die Stapeleinrichtung angeordnet, auf die sich die Erfindung bezieht. Dieser Stapeleinrichtung werden die geformten und ausgestanzten Behälter im Foliengitter hängend zugeführt. In ihr werden die Behälter aus dem Foliengitter ausgebrochen, in Stapelmagazine übergeben, nach Erreichen einer vorgegebenen Anzahl als Stapel ausgeschoben und einer Nachfolgestation zugeführt.

Aus der DE 198 03 300 C1, der DE 198 06 757 A1 und von bekannten Vorrichtungen des Anmelders sind Verfahren bekannt, bei denen die Bewegungen von Stapelteller, Klemmbrille, Stapelmagazinen und Ausschieber teils pneumatisch, teils motorisch vorgenommen werden. Die Verfahrwege sind dabei fix, also nicht veränderbar. Sie sind auf die maximalen Abmessungen der zu stapelnden Behälter, z. B. deren Höhe und Breite, abgestimmt. Kann z. B. die vorgeschaltete Formstation Behälter mit 100 mm Höhe und 200 mm Breite, in Vorschubrichtung betrachtet, bauartbedingt herstellen, muss der Stapelkäfig mindestens 110 mm Hub ausführen, um die Behälter der Stapeleinrichtung horizontal zuführen zu können. Der Schieber muss mindestens 220 mm Horizontalhub ausführen.

Bei Behältern mit geringeren Abmessungen hat es sich als vorteilhaft erwiesen, geringere Wege - und zwar nur die unbedingt erforderlichen - zu fahren, da dann bei gleicher Verfahrzeit langsamere Fahrgeschwindigkeiten vorgegeben werden können. Langsamere Fahrgeschwindigkeiten bedeuten schonenderes Handling der Produkte und der schon gebildeten Stapel. Schnelles Einstapeln der Behälter in die Stapelmagazine führt oft zu Störungen der Stapelbildung und erfordert das Anhalten der Vorrichtung und die Störungsbeseitigung. Ausschuss der Behälter durch deren Deformation kann ebenfalls die Folge sein.

Gerade bei hohen Taktzahlen ist die Zeit zum Bilden der Behälterstapel und zum Ausschieben gebildeter Stapel relativ kurz und erfordert bei großen Verfahrwegen rasche Fahrgeschwindigkeiten, um die Taktzahl nicht zu begrenzen. Dies tritt vor allem dann in Erscheinung, wenn nach vollendeter Stapelbildung zwischen zwei Takten ein Nutzen an Behältern gestapelt und die gebildeten Stapel quer ausgeschoben werden müssen.

Aus der EP-A-1-1 085 389 ist es bekannt, die Steuerung einer Spritzgussmaschine mit der Steuerung eines Roboters zu koordinieren, indem Bewegungen aufeinander abgestimmt werden. Dies erfolgt über numerische Eingabe von Daten oder über Auswahl am Bildschirm einer der Steuerungen. Ziel ist also die Vermeidung einer Kollision.

Aus der US-A-4 757 459 ist ebenfalls die Programmierung eines Roboters bekannt, bei der Anfangs- und Endpunkte unter Betrachtung einer Kollision programmiert werden, um Teile zwischen zwei Punkten zu überführen.

Der Erfindung liegt die Aufgabe zugrunde, Störungen und eine Behälterdeformation bei der Stapelbildung zu reduzieren, die durch große Verfahrwege und rasche Fahrbewegungen hervorgerufen werden.

Gelöst ist diese Aufgabe durch die im Hauptanspruch angegebenen Maßnahmen. Eine bevorzugte Ausgestaltung der Erfindung ist in Anspruch 2 aufgenommen.

Gemäß einer Ausführungsform der Erfindung wird vorgeschlagen, nach einer Umstellung der Vorrichtung zum Herstellen der Behälter und nach einer Anpassung der Stapeleinrichtung, z. B. Einbau aller formatbedingten Bauteile für die Klemmbrille, die Stapelmagazine, die Stapelteller und den Ausschieber, die erforderlichen Verfahrwege dieser Bauteile der Stapeleinrichtung zu definieren. Dazu werden alle oder einzelne der erforderlichen Bewegungen per Tastendruck manuell - mit möglichst langsamer Fahrgeschwindigkeit - angefahren. Ist der minimale, aufgrund der Behälterabmessungen erforderliche Weg erreicht, wird dieser durch einen Befehl "Übernehmen" der Steuerung der Stapeleinrichtung mitgeteilt, die diese Endlage speichert. So werden nacheinander alle einzustellenden Endstellungen der Fahrbewegungen in diese Steuerung übergeben und damit sind diese auf einfache Weise ohne aufwendige manuelle Verstellung von Grenzwertgebern in kürzester Zeit ermittelt. Anschließend werden die pro Behälter ermittelten Fahrwege hinsichtlich Fahrgeschwindigkeit optimiert, in dem die Steuerung feste Werte oder andere Parameter - insbesondere die Taktzahl - heranzieht und aus Weg und Zeit die langsamste mögliche Geschwindigkeit für die einzelnen Fahrwege ermittelt und als Vorschlagswert vorgibt.

Gemäß einer weiteren bevorzugten Ausgestaltung werden die so ermittelten Werte von Fahrwegen und Fahrgeschwindigkeiten in der Steuerung produktbezogen gespeichert. Werden die Stapeleinrichtung und die vorgeschaltete Formmaschine wieder auf denselben Behälter umgestellt werden diese Daten automatisch gezogen.

Das Verfahren ist anhand der schematischen Zeichnungen der Vorrichtung zur Durchführung des Verfahrens näher beschrieben. Es zeigen:
- Figur 1: eine Längsdarstellung der Stapeleinrichtung mit vorgeschalteter Vorrichtung zum Verformen einer Folienbahn.
- Figur 2: einen Querschnitt durch die Stapeleinrichtung entlang der Linie A - A in Figur 1.

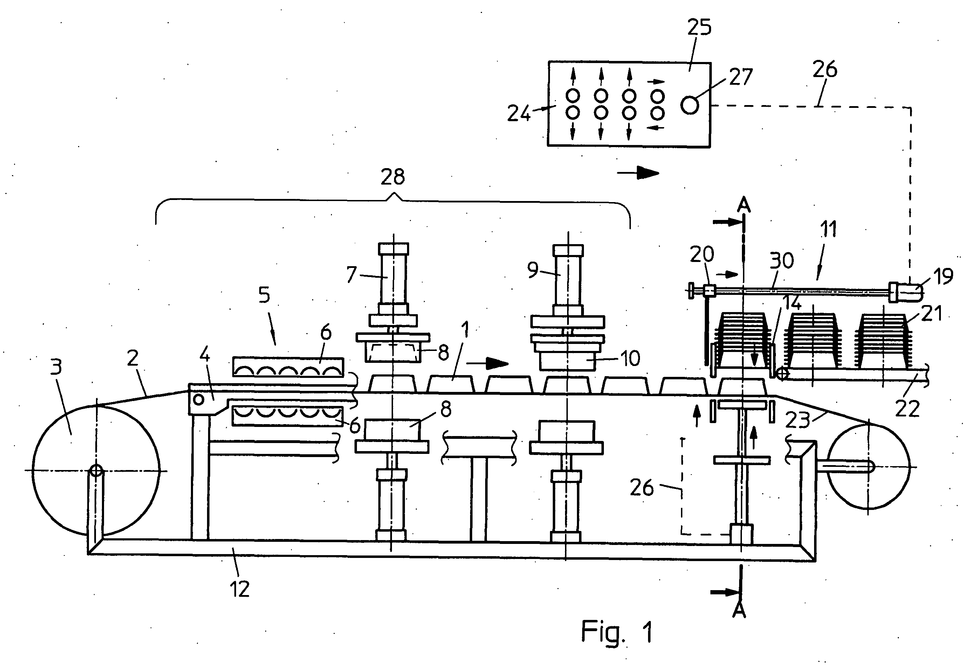

Figur 1 zeigt die Vorrichtung zum Verformen und Ausstanzen von Behältern 1 aus einer Folienbahn 2, die der Vorrichtung 28 zum Formen und Ausstanzen der Behälter 1 von einer Rolle 3 oder direkt von einem Extruder zugeführt wird. Den taktweisen Folientransport zu den einzelnen Stationen übernimmt die Transporteinrichtung 4. In Transportrichtung folgt als erstes eine Heizstation 5, in der mit Heizungen 6 eine Erwärmung der Folienbahn 2 auf Verformungstemperatur stattfindet. Es schließt sich die Formstation 7 an, in der mittels des Werkzeuges 8 und Drucktuft/Vakuum eine Verformung der Folienbahn 2 zu Behältern 1 erfolgt. Diese werden entweder in einer nachfolgenden Stanzstation 9 mit einem Stanzwerkzeug 10 ausgestanzt. Oder das Ausstanzen erfolgt bereits in der Formstation 7 durch entsprechend gestaltete kombinierte Form- und Stanzwerkzeuge. Ausstanzen bedeutet, dass die Behälter 1 ringsum bis auf kleine Verbindungsstellen aus der Folienbahn 2 ausgetrennt werden, sodass sie noch in der Folienbahn gehalten sind und zu der Stapeleinrichtung 11 geführt und dort ausgebrochen werden können.

Das Verfahren findet Anwendung bei der Stapeleinrichtung 11, die in das Gestell 12 der Vorrichtung 28 eingebaut sein kann oder als eigene Stapeleinrichtung 11 beigestellt ist. Sie ist als Ganzes in Vorschubrichtung der Folienbahn 2 verschiebbar, um in die richtige teilungsgerechte Position zu den Behältern 1 gebracht werden zu können.

Die Stapeleinrichtung 11 besteht aus einem über einen Antrieb 13 höhenverschiebbaren, an Führungen 31 geführten Stapelkäfig 14, einer über einen Antrieb 15 höhenverschiebbare Klemmbrille 16, den über einen Antrieb 17 höhenverschiebbaren, an einer Platte 29 sitzenden Stapeltellem 18 entsprechend der Anzahl geformter Behälter 1 pro Nutzen und dem über den Antrieb 19 horizontal an Führungen 30 verschiebbaren Schieber 20. Das Ausschieben der aus Behältern 1 gebildeten Stapel 21 erfolgt auf ein umlaufendes Transportband 22 oder ein Leitblech, das Folienrestgitter 23 wird aufgewickelt oder direkt einer Mühle zugeführt. Bei den Antrieben 15, 17, 19 handelt es sich um Servomotoren.

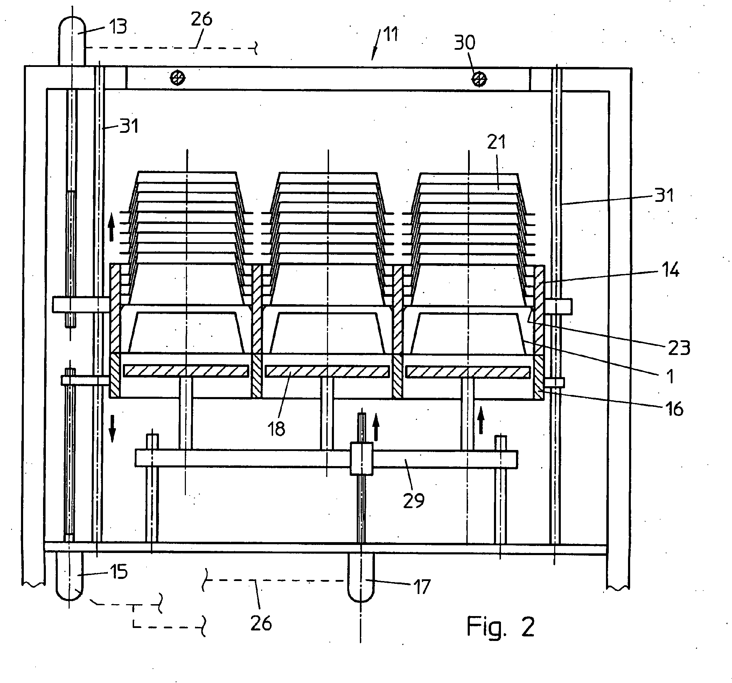

Verfahrenstechnisch werden im Produktionsbetrieb nach dem Vorschub eines Nutzens geformter und ausgetrennter Behälter 1 (Ausgangslage in Figur 1 dargestellt) der Stapelkäfig 14 abgesenkt und die Klemmbrille 16 angehoben, so dass die Folienbahn 2 an den Zwischenstegen zwischen ihnen eingeklemmt ist. (siehe Figur 2). Jetzt werden die Stapelteller 18 aufwärts gefahren, wodurch sie die geformten Behälter 1 aus der Folienbahn 2 ausbrechen und soweit nach oben in den Stapelkäfig 14 hineinschieben, bis diese von den Rückhalteorganen 23 erfasst sind, so dass die Stapelteller 18 wieder abgesetzt werden können. Es folgt das Anheben des Stapelkäfigs 14 und das Absenken der Klemmbrille 16, so dass beim nächsten Takt ein Eintransport des folgenden Nutzens an Behältern 1 erfolgen kann. Haben die sich bildenden Stapel 21 eine vorgegebene Anzahl an Behältern 1 erreicht werden sie vom Schieber 20 bei angehobenem Stapelkäfig 14 auf das Transportband 22 geschoben.

Die Verfahrwege von Klemmbrille 16, Stapelkäfig 14, Stapeltellern 18 und Schieber 20 werden optimiert anhand der Abmessung der geformten Behälter 1 und zwar wie folgt:

Nach dem Umstellen der vorgeschalteten Vorrichtung 28 zum Verformen einer Folienbahn 2 und Ausstanzen der Behälter 1 auf eine neue Behälterform durch Einbau von entsprechenden Werkzeugen 8, 10 und der Anpassung des Transportschrittes der Folienbahn 2 wird die Stapeleinrichtung 11 angepasst. Zunächst wird die richtige Lage zur Stanzstation 9 in bekannter Weise eingestellt. Darauf hin wird ein verformter Nutzen der Folienbahn 2 mittels der Transporteinrichtung 4 in die Stapeleinrichtung 11 transportiert (Lage Figur 1). Über Drucktaster 24 in der Steuerung 25, die über Steuerleitungen 26 mit den Antrieben 15, 17, 19 verbunden ist, werden sodann manuell Fahrbewegungenvorzugsweise in langsamer Geschwindigkeit - ausgelöst.

So fährt man zuerst die Klemmbrille 16 nach oben und den Stapelkäfig 14 nach unten, bis eine gute Einklemmung der Folienbahn in gewünschter Höhenlage erreicht ist. Nach Erreichen dieser Endstellung wird jeweils über eine Speichertaste 27 der Steuerung 25 mitgeteilt, dass diese Endlage gespeichert und zukünftig während des Betriebes der Stapeleinrichtung 11 angefahren werden soll.

Als nächstes wird die obere Endlage der Stapelteller 18 über den zugeordneten Drucktaster 24 angefahren in der Weise, dass die Behälter 1 die Rückhalteorgane 23 gerade überfahren. Diese optimale Endlage wird wieder über die Speichertaste 27 festgehalten. Daraufhin fährt man nacheinander die untere Endlage der Klemmbrille 16 und der Stapelteller 18 an und bestätigt jeweils über die Speichertaste 27. Diese untere Endlage wird im wesentlichen bestimmt von der Gestalt der Behälter 1 sowie der Gestaltung der Klemmbrille 16 und des Stapelkäfigs 14.

Als nächstes wird die obere Endlage des Stapelkäfigs 14 über den zugeordneten Drucktaster 24 angefahren. Diese Endlage ist abhängig von der Höhe der Behälter 1, die unter dem hochgefahrenen Stapelkäfig 14 durchgefahren werden müssen und wird ebenfalls über die Speichertaste 27 in der Steuerung 25 gespeichert.

Zuletzt bewegt man den Schieber 20, so dass ein Stapel 21 auf das Förderbands 22 oder ein Ablageblech ausgeschoben wird, wobei der Fahrweg etwas größer gewählt wird als die Breite der Behälter 1. Wiederum wird nur der minimal erforderliche produktabhängige Verschiebeweg gewählt und die Endlage gespeichert. Gegebenenfalls wird auch die Ausgangslage des Schiebers 20 auf diese Weise optimiert. Diese kann aber auch fix sein.

Auf diese Weise werden zunächst alle Verfahrwege auf einfache Weise optimal ermittelt und festgehalten. Sie können unter der Produktbezeichnung gespeichert und bei erneuter Umrüstung der Stapeleinrichtung 11 auf diese Behälterform aufgerufen werden. Die Fahrgeschwindigkeiten der Antriebe 15, 17, 19 können in Abhängigkeit der Verfahrwege und aufgrund der Taktzahl der Vorrichtung 28 manuell eingestellt werden. Sie werden so langsam wie möglich gewählt, so dass kurz vor Taktzeitende alle Bewegungen vollendet und die Endlagen erreicht sind.

Die Fahrgeschwindigkeiten werden anhand vorgegebener Verfahrzeiten oder der bekannten Taktzahl zumindest als Vorschlagswert von der Steuerung 25 ermittelt. Gewisse Bewegungen wird man immer mit maximaler Geschwindigkeit ausführen, da sie keinen Einfluss auf Deformation der Behälter und/oder auf Störungen der Stapelbildung und -handling haben. Dies betrifft die Bewegungen von Klemmbrille 16 auf/ab, Stapelteller 18 ab und Schieber 20 zurück. Die anderen Bewegungen sollten möglichst langsam ablaufen und werden von der Steuerung errechnet aus vorgegebenen Verfahrzeiten oder aus festen Beziehungen zwischen Taktzeit und einzelnen Fahrzeiten. So kann man beispielsweise definieren, die Fahrzeit der Stapelteller 18 betrage 5 % der Taktzeit. Aus Weg und Zeit wird dann die Geschwindigkeit errechnet und zunächst vorgegeben. Manuelle Optimierungen werden bei Bedarf vorgenommen.

## Patentansprüche

1. Verfahren zum Einstellen der Prozessdaten einer Stapeleinrichtung zum Stapeln von taktweise zugeführten Behältern (1), die aus einer thermoplastischen Kunststofffolie geformt und aus dieser ausgestanzt werden, wobei die Stapeleinrichtung (11) aus mehreren angetriebenen Bauteilen, wie Klemmbrille (16), Stapelkäfig (14), Stapelteiler (18) oder Schieber (20), besteht und eine Steuerung (25) aufweist, wobei zum Festlegen der Endlagen der Verfahrwege dieser Bauteile (14, 16, 18, 20) deren Fahrbewegungen nacheinander einzeln manuell gestartet werden und nach Erreichen des mindestens erforderlichen, produktabhängigen Fahrweges diese Endlage über Tastendruck an die Steuerung (25) übergeben wird und in der Produktion diese Endlagen angefahren werden und wobei die Steuerung (25) aufgrund der ermittelten Verfahrwege und einer vorgegebenen Verfahrzeit oder Taktzahl der Stapeleinrichtung (11) die Fahrgeschwindigkeiten der Fahrbewegungen ermittelt, um die Fahrgeschwindigkeit für gewisse Fahrbewegungen zu optieren, und diese Fahrgeschwindigkeiten, zumindest als Vorschlagwert, vorgibt.

2. Verfahren nach Anspruch 1, **dadurch gekennzeichnet, dass** diese Endlangen produktbezogen gespeichert und bei erneuter Umrüstung der Stapeleinrichtung (11) auf dieses Produkt herangezogen werden.

## Claims

1. A method for setting the process data, a stacking device for the stacking of cyclically fed containers (1), which are moulded from a thermoplastic plastic film and stamped out of the latter, wherein the stacking device (11) comprises a plurality of driven components, such as a clamping collar (16), a stacking cage (14), a stacking dish (18) or a slide (20), and has a control (25), wherein, for the purpose of fixing the end positions of the travel paths of these components (14, 16, 18, 20), their travel movements are manually started individually one after the other and, after reaching the minimum required product-dependent travel path, this end position is transmitted to the control (25) by a key depression and these end positions are started up in production and wherein the control (25) determines the travel speeds of the travel movements on the basis of the ascertained travel paths and a predetermined travel time or cycle time of the stacking device (11), in order to optimise the travel speed for certain travel movements, and preselects these travel speeds, at least as a proposed value.

2. The method according to claim 1, **characterised in that** these end positions are stored product-related and are used when resetting the stacking device (11) for this product.

## Revendications

1. Procédé de réglage de données de processus pour un dispositif d'empilage servant à empiler de façon cyclique des réservoirs (1) qui sont formés et découpés dans une feuille de matière plastique thermoplastique, le dispositif d'empilage (11) étant constitué de plusieurs éléments de construction mécaniques, tels qu'une lunette de serrage (16), une cage d'empilage (14), un plateau d'empilage (18) ou un poussoir (20) et comportant une commande (25), les déplacements étant déclenchés manuellement les uns après les autres en vue de l'immobilisation des déplacements de ces éléments de construction (14, 16, 18, 20) en position finale, cette position finale étant déterminée par une pression sur un bouton de commande (25) une fois que le déplacement nécessaire pour les produits est effectué, les positions finales étant atteintes au cours de la production, et la commande (25) permettant de régler la vitesse de déplacement à partir des déplacements prévus et du temps de déplacement indiqué ou du cycle du dispositif d'empilage (11), afin d'optimiser la vitesse de déplacement pour certains déplacements, et d'indiquer les vitesses de déplacement conseillées.

2. Procédé selon la revendication 1, **caractérisé en ce que** les positions finales sont enregistrées en fonction du produit et ré-appliquées au produit concerné lors d'une transformation du dispositif d'empilage (11).
